(19) Europäisches Patentamt
European Patent Office
Office européen des brevets

(11) EP 4 782 499 A1

(12) # EUROPEAN PATENT APPLICATION
published in accordance with Art. 153(4) EPC

(43) Date of publication:
**29.07.2026 Bulletin 2026/31**

(21) Application number: **24868343.5**

(22) Date of filing: **20.09.2024**

(51) International Patent Classification (IPC):
***C08L 29/04*** *(2006.01)* ***B65D 65/40*** *(2006.01)*

(52) Cooperative Patent Classification (CPC):
**B65D 65/40; C08L 29/04**

(86) International application number:
**PCT/JP2024/033596**

(87) International publication number:
**WO 2025/063266 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 JP 2023156287**

(71) Applicant: **Mitsubishi Chemical Corporation
Tokyo 100-8251 (JP)**

(72) Inventors:
- **ANABUKI, Mizuki
Tokyo 100-8251 (JP)**
- **SENO, Ryuta
Tokyo 100-8251 (JP)**

(74) Representative: **Vossius & Partner
Patentanwälte Rechtsanwälte mbB
Siebertstraße 3
81675 München (DE)**

(54) **COMPOSITION, MATERIAL FOR MELT PROCESSING, MULTI-LAYERED STRUCTURE, MULTI-LAYERED CONTAINER, AND METHODS FOR PRODUCING COMPOSITION AND MULTI-LAYERED STRUCTURE**

(57) Provided is a composition containing an ethylene-vinyl alcohol copolymer (A) and a titanium compound (B),
the ethylene-vinyl alcohol copolymer (A) containing at least two types, which are an ethylene-vinyl alcohol copolymer (A1) and an ethylene-vinyl alcohol copolymer (A2), having different ethylene structural unit contents,
a difference between the ethylene structural unit contents between the ethylene-vinyl alcohol copolymer (A1) and the ethylene-vinyl alcohol copolymer (A2) in the ethylene-vinyl alcohol copolymer (A) being 4 mol% or greater,
the ethylene-vinyl alcohol copolymer (A2) having a degree of saponification of from 90 to 99.7 mol%, and
a content of the titanium compound (B) in terms of metal being $0.001 \times 10^{-6}$ parts by mass or greater and less than $5 \times 10^{-6}$ parts by mass with respect to 1 part by mass of the ethylene-vinyl alcohol copolymer (A2), as a composition having an increased thermal decomposition temperature during melt molding and excellent thermal stability.

EP 4 782 499 A1

## Description

### Technical Field

The present disclosure relates to a composition, a material for melt molding, a multi-layered structure, a multi-layered container, and methods for producing a composition and a multi-layered structure.

### Background Art

Ethylene-vinyl alcohol copolymers (hereinafter, which may be referred to as "EVOH resin") are excellent in transparency, gas barrier properties with respect to oxygen or the like, aroma retaining properties, solvent resistance, oil resistance, mechanical strength, and the like. The ethylene-vinyl alcohol copolymers are molded into films, sheets, bottles, and the like, and are widely used as various packaging materials such as food packaging materials, pharmaceutical packaging materials, industrial drug packaging materials, and agrochemical packaging materials.

However, an EVOH resin readily deteriorates due to heat because the EVOH resin has a relatively active hydroxyl group in a molecule. In particular, an EVOH resin having a low degree of saponification is characterized by having excellent stretchability and container moldability; however, thermal resistance tends to deteriorate further because a reaction such as thermal decomposition of a vinyl ester monomer structural unit before saponification or elimination of an acid occurs. Thus, problems such as coloring and gel at the time of melt molding occur, and melt stability tends to decrease. Thus, a method for producing a composition that is less likely to cause defects in appearance at the time of molding has been studied.

For example, Patent Document 1 describes a composition containing EVOH resins having different ethylene contents and degrees of saponification in combination. In this composition, the difference between the ethylene contents of the two types of EVOH resins used in combination is 4 mol% or greater, and the difference between the degrees of saponification is 3 mol% or greater. In addition, a molded product including an intermediate layer containing compositions having a difference of solubility parameters of not lower than a predetermined value, and obtained by vacuum-pressure molding a laminate, in which a polyethylene layer and the like are laminated, has excellent transparency and appearance, causes no cracking and no uneven thickness, and has excellent gas barrier properties.

Furthermore, Patent Document 2 describes that, with from 0.005 to 0.1 parts by mass of an organic titanate contained per 100 parts by mass of an EVOH resin, unevenness of thickness in a width (TD) direction during film formation such as inflation molding is suppressed, and thus a molded product, such as a film or a sheet, having a uniform thickness is obtained.

Furthermore, Patent Document 3 describes that, with a specific amount of unsaturated aldehyde contained in an EVOH resin, oxidation degradation at the time of melt molding is suppressed, and coloring can be suppressed.

### Citation List

#### Patent Document

Patent Document 1: JP 63-230757 A
Patent Document 2: JP 2004-244451 A
Patent Document 3: WO 2013/146961

### Summary

#### Technical Problem

However, in techniques described in Patent Documents 1 and 2, thermal stability of the composition at the time of melt molding or the like is insufficient and there is room for improvement. Furthermore, in a technique described in Patent Document 3, because an aldehyde compound, even in a trace amount, may cause malodor, there is a concern that the aldehyde compound volatilizes particularly at the time of melt molding, in which the compound is exposed to a high temperature, and thus the working environment is deteriorated. Thus, there is a demand for a composition having excellent thermal stability at the time of melt molding without use of such a volatile compound.

In such circumstances, the present disclosure provides a composition having excellent thermal stability by improving a thermal decomposition temperature of the composition at the time of melt molding.

Solution to Problem

The inventors of the present disclosure found that, by blending two or more types of EVOH resins having different ethylene structural unit contents and blending a specific trace amount of a titanium compound with respect to a specific EVOH resin contained in the EVOH resin, thermal decomposition temperature of a composition at the time of melt molding improves, and thus a composition having excellent thermal stability is obtained.
That is, the present disclosure provides the following aspects.

[1] A composition containing an EVOH resin (A) and a titanium compound (B),

the EVOH resin (A) containing at least two types, which are an EVOH resin (A1) and an EVOH resin (A2), having different ethylene structural unit contents,
a difference between the ethylene structural unit contents between the EVOH resin (A1) and the EVOH resin (A2) in the EVOH resin (A) being 4 mol% or greater,
the EVOH resin (A2) having a degree of saponification of from 90 to 99.7 mol%, and
a content of the titanium compound (B) in terms of metal being $0.001 \times 10^{-6}$ parts by mass or greater and less than $5 \times 10^{-6}$ parts by mass with respect to 1 part by mass of the EVOH resin (A2).

[2] The composition according to [1], where the ethylene structural unit content of the EVOH resin (A2) is greater than the ethylene structural unit content of the EVOH resin (A1).
[3] The composition according to [1] or [2], where the degree of saponification of the EVOH resin (A2) is lower than a degree of saponification of the EVOH resin (A1).
[4] The composition according to any one of [1] to [3], where a difference between a degree of saponification of the EVOH resin (A1) and the degree of saponification of the EVOH resin (A2) is 0.2 mol% or greater.
[5] The composition according to any one of [1] to [4], where a mass content ratio (A1/A2) of the EVOH resin (A1) to the EVOH resin (A2) is from 95/5 to 50/50.
[6] The composition according to any one of [1] to [5], where a content ratio in terms of metal (Ti/VAc) [μmol/mol] of the titanium compound (B) to a vinyl ester structural unit that, without being saponified, remains in the EVOH resin (A2) is from 0.1 to 300.
[7] A material for melt molding, the material containing the composition according to any one of [1] to [6].
[8] A multi-layered structure including a layer containing the composition according to any one of [1] to [6].
[9] A multi-layered container including the multi-layered structure according to [8].
[10] The multi-layered container according to [9], where the multi-layered container has a shape of a cup or a tray.
[11] A method for producing the composition according to any one of [1] to [6],

the method including
mixing the two or more types of EVOH resins (A) having different ethylene structural unit contents and a titanium compound.

[12] A method for producing the multi-layered structure according to [8],

the method including
melt molding a layer containing the composition.

Advantageous Effects of Disclosure

The composition of the present disclosure increases the thermal decomposition temperature of the composition at the time of melt molding and is excellent in thermal stability.

Description of Embodiments

The present disclosure will be described below with reference to embodiments for carrying out the present disclosure. However, the present disclosure is not limited to the embodiments described below.
Note that, in the present specification, the wording "x and/or y (with x and y being any configurations)" means at least one selected from x and y, and includes the three meanings of only x, only y, and both x and y.
Unless otherwise specified, the expression "(from) X to Y" (with X and Y being any numbers) includes the meaning of "X or greater and Y or less" and the meaning of "preferably greater than X" or "preferably less than Y".
When the expression "X or greater (X or more)" (X being any number) or "Y or less" (Y being any number) is used,

the expression also includes the meaning of "preferably greater than X" or "preferably less than Y".

In the present specification, with respect to numerical ranges described in steps, the upper limit value or the lower limit value of a numerical range of a certain step can be optionally combined with the upper limit value or the lower limit value of a numerical range of another step. In addition, in a numerical range described in the present specification, the upper limit value or the lower limit value of the numerical range can be replaced with a value presented in the Examples.

Composition

The composition according to an embodiment of the present disclosure (hereinafter, which may be referred to as "present composition") contains an EVOH resin (A) containing two or more types of EVOH resins having different ethylene structural unit contents as a main component, and a specific trace amount of a titanium compound (B) with respect to a specific EVOH resin.

That is, the present composition contains the EVOH resin (A) as a base resin, and the content of the EVOH resin (A) in the present composition is usually 70 mass% or greater, preferably 80 mass% or greater, more preferably 90 mass% or greater, and particularly preferably 95 mass% or greater.

Hereinafter, the respective components will be described.

EVOH Resin (A)

The EVOH resin (A) used in the present embodiment contains at least two types, which are an EVOH resin (A1) and an EVOH resin (A2), having different ethylene structural unit contents. Furthermore, the EVOH resin (A) is usually a water-insoluble thermoplastic resin obtained by saponification of an ethylene-vinyl ester copolymer, which is a copolymer of ethylene and a vinyl ester monomer.

As the vinyl ester monomer, vinyl acetate is typically used from the viewpoints of good market availability and good impurity treatment efficiency during manufacturing. Examples of other vinyl ester monomers besides vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester that can be used has usually from 3 to 20 carbons, preferably from 4 to 10 carbons, and particularly preferably from 4 to 7 carbons. A single type of these is usually used alone; however, as necessary, a plurality of types of these may be used simultaneously.

As the polymerization method to copolymerize ethylene and the vinyl ester monomer, any known polymerization method, such as solution polymerization, suspension polymerization, or emulsion polymerization, can be used; however, solution polymerization using methanol as a solvent is usually used. Furthermore, saponification of the resulting ethylene-vinyl ester copolymer can also be carried out by a known method.

The EVOH resin thus produced is mainly composed of an ethylene-derived structural unit and a vinyl alcohol structural unit, and contains a small amount of a vinyl ester structural unit that remains without being saponified.

Moreover, the EVOH resin (A) may further contain, within a range that does not impair the effects of the present disclosure, a structural unit derived from a comonomer described below (for example, 10 mol% or less of the EVOH resin).

Examples of the comonomer include olefins such as propylene, 1-butene, and isobutene; hydroxy group-containing $\alpha$-olefins such as 3-buten-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group having from 1 to 18 carbons; acrylamides such as acrylamide, N-alkylacrylamides having an alkyl group having from 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group having from 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers, such as alkyl vinyl ethers, hydroxyalkyl vinyl ethers, and alkoxyalkyl vinyl ethers each having an alkyl group having from 1 to 18 carbons; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more types.

In particular, hydroxy group-containing $\alpha$-olefins are preferred, and 3-butene-1,2-diol and 5-hexene-1,2-diol are

particularly preferred. In a case where the hydroxy group-containing α-olefins are copolymerized, the resulting EVOH resin has a primary hydroxyl group in a side chain. Such an EVOH resin having a primary hydroxyl group in a side chain, particularly an EVOH resin having a 1,2-diol structure in a side chain, is preferred because good secondary moldability is achieved while gas barrier properties are maintained.

When the EVOH resin (A) has a primary hydroxyl group in a side chain, the content of a structural unit derived from a monomer having the primary hydroxyl group is usually from 0.1 to 20 mol%, preferably from 0.5 to 15 mol%, particularly preferably from 1 to 10 mol%, of the EVOH resin.

Furthermore, as the EVOH resin (A), a "post-modified" EVOH resin, such as an esterified, urethanized, acetalized, cyanoethylated, or oxyalkylenated EVOH resin, can also be used.

In a case where the post-modified EVOH resin is used, the modification percentage thereof is usually 10 mol% or less, and preferably 4 mol% or less. When the modification percentage of the EVOH resin is in the range described above, thermal degradation is less likely to occur, and long-run properties tend to improve.

Note that the EVOH resin (A) used in the present composition is an EVOH resin other than the modified EVOH resin having a structure represented by Chemical Formula (1) below.

[Chem. 1]

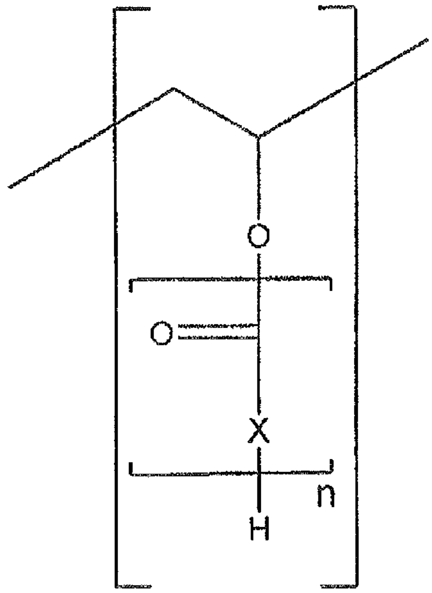

(1)

In Chemical Formula (1), X represents an organic chain having a heteroatom, and n represents a positive integer.

The EVOH resin (A) used as described above contains at least two types, which are an EVOH resin (A1) and an EVOH resin (A2), having different ethylene structural unit contents. The number of types of the EVOH resins having different ethylene structural unit contents is usually from 2 to 4, preferably from 2 to 3, and particularly preferably 2. When the number of types is in the range described above, productivity and economic efficiency tend to be excellent.

Note that the number of types of EVOH resins having different ethylene structural unit contents contained in the present composition can be determined from the number of peaks measured by using the differential scanning calorimeter (DSC) described below.

The ethylene structural unit content of the EVOH resin (A2) is preferably greater than the ethylene structural unit content of the EVOH resin (A1) from the viewpoints of gas barrier properties and container moldability.

Furthermore, from the viewpoints of gas barrier properties and container moldability, the EVOH resin (A1) is preferably an EVOH resin having the smallest ethylene structural unit content in the EVOH resin (A) and the EVOH resin (A2) is preferably an EVOH resin having the largest ethylene structural unit content in the EVOH resin (A).

The difference in the ethylene structural unit contents of the EVOH resin (A1) and the EVOH resin (A2) in the EVOH resin (A) is 4 mol% or greater, preferably from 5 to 30 mol%, more preferably from 6 to 25 mol%, and even more preferably from 7 to 20 mol%. When the difference in the ethylene structural unit contents is not lower than the lower limit value, uneven thickness or cracking are less likely to occur at the time of molding of a multi-layered container. When the difference in the ethylene structural unit contents is not higher than the upper limit value, gas barrier properties tend to improve, and the appearance tends to be excellent.

The difference in the ethylene structural unit contents of the two or more types of the EVOH resins contained in the

EVOH resin (A) described above can be determined by, for example, using $^1$H-NMR.

The ethylene structural unit content in the EVOH resin (A) is usually from 20 to 60 mol%, preferably from 22 to 50 mol%, and particularly preferably from 25 to 45 mol%. When the content is not lower than the lower limit value, in the case of use for gas barrier property purposes, gas barrier properties at a high humidity and melt moldability tend to improve. When the content is not higher than the upper limit value, gas barrier properties tend to improve.

The ethylene structural unit content of the EVOH resin (A1) is usually from 20 to 50 mol%, preferably from 22 to 45 mol%, more preferably from 24 to 40 mol%, and even more preferably from 27 to 35 mol%. When the ethylene structural unit content is not lower than the lower limit value, secondary processability and flexibility tend to improve. When the ethylene structural unit content is not higher than the upper limit value, gas barrier properties tend to improve.

The ethylene structural unit content of the EVOH resin (A2) is usually from 30 to 60 mol%, preferably from 32 to 55 mol%, more preferably from 35 to 51 mol%, and even more preferably from 38 to 44 mol%. When the ethylene structural unit content is not lower than the lower limit value, secondary processability and flexibility tend to improve. When the ethylene structural unit content is not higher than the upper limit value, gas barrier properties tend to improve.

Note that an ethylene structural unit content in an EVOH resin or in a composition in the present specification means a value measured by using $^1$H-NMR.

Furthermore, the EVOH resin (A) contains at least two types, which are the EVOH resin (A1) and the EVOH resin (A2), having different ethylene structural unit contents, and additionally, the EVOH resin (A1) and the EVOH resin (A2) preferably have different degrees of saponification, and the degree of saponification of the EVOH resin (A2) is more preferably lower than the degree of saponification of the EVOH resin (A1).

The degree of saponification of the EVOH resin (A) is usually from 90 to 100 mol%, preferably from 95 to 100 mol%, and particularly preferably from 97 to 100 mol%. When the degree of saponification is not lower than the lower limit value, gas barrier properties, thermal stability, moisture resistance, and the like tend to improve.

The difference between the degrees of saponification of the EVOH resin (A1) and the EVOH resin (A2) in the EVOH resin (A) is usually 0.2 mol% or greater, preferably 0.3 mol% or greater, more preferably 0.4 mol% or greater, and even more preferably 0.5 mol% or greater. When the difference in the degrees of saponification is not lower than the lower limit value, uneven thickness or cracking are less likely to occur at the time of molding of a multi-layered container. When the difference in the degrees of saponification is not higher than the upper limit value, gas barrier properties tend to improve.

The degree of saponification of the EVOH resin (A1) is usually from 90 to 100 mol%, preferably from 95 to 100 mol%, more preferably from 99 to 100 mol%, and particularly preferably from 99.5 to 100 mol%. When the degree of saponification is not lower than the lower limit value, gas barrier properties, thermal stability, moisture resistance, and the like tend to improve.

The degree of saponification of the EVOH resin (A2) is usually from 90 to 99.7 mol%, preferably from 93 to 99.5 mol%, and more preferably from 95 to 99 mol%. When the degree of saponification is not lower than the lower limit value, gas barrier properties, thermal stability, moisture resistance, and the like tend to improve. When the degree of saponification is not higher than the upper limit value, secondary processability and flexibility tend to improve.

Note that, in the present specification, the ethylene structural unit content and the degree of saponification are calculated by the following measurement methods.

Measurement Methods of Ethylene Structural Unit Content and Degree of Saponification

In a vial, 50 mg of an EVOH resin or a composition thereof is weighed, 1 mL of dimethyl sulfoxide-d6 (DMSO-d6) is added thereto, the EVOH resin or the composition is dissolved through heating and stirring at 50°C, and $^1$H-NMR measurement is performed under the following conditions.

(Measurement Conditions)

- Instrument name: heat conducting nuclear magnetic resonance device "AVANCE III HD 400" available from Bruker Corporation
- Observation frequency: 400 MHz
- Solvent: DMSO-d6 (2.5 ppm)
- Polymer concentration: 5 w/v%
- Measurement temperature: 50°C
- Number of integrations: 16 times

Analysis Method

From the measured spectrum, the integrated value (11) of the signal of the chemical shift at 4.0-3.3 ppm, the integrated value (I2) of the signal of the chemical shift at 2.0 ppm, the integrated value (I3) of the signal of the chemical shift at 1.9-1.0 ppm, and the integrated value (I4) of the signal of the chemical shift at 1.0-0.7 ppm are determined. Here, the signal of the chemical shift at 4.0-3.3 ppm is mainly derived from methine hydrogen adjacent to a hydroxy group. The signal of the chemical shift at 2.0 ppm is derived from methyl hydrogen in an unsaponified vinyl acetate unit. The signal of the chemical shift at 1.9-1.0 ppm is derived from methylene hydrogen in a main chain. The signal of the chemical shift at 1.0-0.7 ppm is derived from methyl hydrogen in an ethylene unit terminal. From these integrated values, the ethylene structural unit content and the degree of saponification are calculated by the following expressions.
Expression for Ethylene Structural Unit Content

$$(3 \times I3 - 6 \times I1 - 2 \times I2 + 2 \times I4)/(3 \times I3 + 6 \times I1 + 2 \times I2 + 2 \times I4) \times 100$$

Expression for Degree of Saponification

$$(3 \times I1)/\{(3 \times I1) + I2\} \times 100$$

Furthermore, the melt flow rate (MFR) (210°C; load: 2160 g) of the EVOH resin (A) is usually from 0.5 to 100 g/10 min, preferably from 1 to 50 g/10 min, and particularly preferably from 2 to 35 g/10 min. When the MFR is not higher than the upper limit value, film formability tends to be stable. When the MFR is not lower than the lower limit value, the viscosity does not become excessively high, and melt extrusion tends to be facilitated.
The melt flow rate (MFR) (210°C; load: 2160 g) of the EVOH resin (A1) is usually from 1 to 100 g/10 min, preferably from 2 to 50 g/10 min, and particularly preferably from 3 to 10 g/10 min. When the MFR is not higher than the upper limit value, mechanical strength of the molded product tends to improve. When the MFR is not lower than the lower limit value, molding processability tends to improve.
The melt flow rate (MFR) (210°C; load: 2160 g) of the EVOH resin (A2) is usually from 1 to 100 g/10 min, preferably from 2 to 50 g/10 min, and particularly preferably from 3 to 30 g/10 min. When the MFR is not higher than the upper limit value, mechanical strength of the molded product tends to improve. When the MFR is not lower than the lower limit value, molding processability tends to improve.
Note that, for the combination of the EVOH resin (A1) and the EVOH resin (A2), the molecular weights of the EVOH resins and the like are preferably adjusted so that the difference of the MFRs (210°C; load: 2160 g) (ΔMFR) is preferably set to 5 g/10 min or less, and more preferably set to 1.5 g/10 min or less, in such a manner that the flowability of the resins at the time of melt molding becomes approximately the same.
In the present specification, by using a semi-automated melt flow index tester (available from Toyo Seiki Seisaku-sho, Ltd.), the MFR was determined by measuring a flow rate of a sample passing through an orifice having a length of 8 mm and an orifice size of 2.095 mm at a temperature of 210°C and a load of 2160 g.
Furthermore, the mass content ratio (A1/A2) of the EVOH resin (A1) to the EVOH resin (A2) is usually from 95/5 to 50/50, preferably from 90/10 to 55/45, more preferably from 88/12 to 60/40, and particularly preferably from 85/15 to 70/30. When the content of the EVOH resin (A1) is not lower than the lower limit value, gas barrier properties tend to be excellent. When the content is not higher than the upper limit value, uneven thickness or cracking are less likely to occur at the time of molding of a multi-layered container.
The content ratio can be calculated by using $^1$H-NMR (Ascend NMR 400, available from Bruker Japan K.K.). That is, each of the EVOH resin (A1) and the EVOH resin (A2) is isolated by a method such as extraction by a corresponding good solvent and subjected to $^1$H-NMR measurement, and then the ethylene structural unit contents of the EVOH resin (A1) and the EVOH resin (A2) are calculated. Since the ethylene structural unit content determined by the $^1$H-NMR measurement of the EVOH resin (A) are a weighted average of the EVOH resin (A1) and the EVOH resin (A2), the aforementioned mass content ratio (A1/A2) can be calculated by using the measurement results of the ethylene structural unit contents of the EVOH resin (A1) and the EVOH resin (A2).

Titanium Compound (B)

Examples of the titanium compound (B) include inorganic titanium compounds and organic titanium compounds. These titanium compounds may be used alone or in combination of two or more types. Among these, an inorganic titanium compound is preferable.
Examples of the inorganic titanium compound include titanium oxides, titanium hydroxides, titanium chlorides, and inorganic salts of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

Examples of the inorganic salt of titanium include those except the aforementioned titanium chloride and include titanium phosphate and titanium sulfate.

Among these, titanium oxides are preferable, titanium(IV) oxide is more preferable, rutile-type titanium(IV) oxide is particularly preferable.

Examples of the organic titanium compound include titanium carboxylates such as titanium acetate, titanium butyrate, and titanium stearate.

The titanium compound (B) may be present as a titanium compound in the composition, or may be present in an ionized state or in a complex state in which the titanium compound (B) interacts with the EVOH resin or another ligand.

The average particle size of the titanium compound (B) is usually from 0.001 to 100 μm, preferably from 0.01 to 50 μm, and more preferably from 0.015 to 20 μm. When the average particle size of the titanium compound is within the range described above, the effect of suppressing coloring tends to be excellent.

The content of the titanium compound (B) in terms of metal is $0.001 \times 10^{-6}$ parts by mass or greater and less than $5 \times 10^{-6}$ parts by mass, preferably from $0.005 \times 10^{-6}$ to $4 \times 10^{-6}$ parts by mass, more preferably from $0.01 \times 10^{-6}$ to $3 \times 10^{-6}$ parts by mass, and even more preferably from $0.05 \times 10^{-6}$ to $2 \times 10^{-6}$ parts by mass, with respect to 1 part by mass of the EVOH resin (A2). When the content of the titanium compound is not higher than the upper limit value, thermal decomposition of the EVOH resin is less likely to occur. When the content is not lower than the lower limit value, an effect of suppressing thermal degradation tends to improve.

Note that the content of the titanium compound (B) in terms of metal is a content of titanium element.

The content of the titanium compound (B) in terms of metal can be determined by weighing the present composition in a platinum crucible, sequentially ashing the composition with a burner and an electric furnace, thermally decomposing the ashed product with nitric acid and hydrofluoric acid, adjusting the volume of the decomposed product to a fixed volume by treating the decomposed product with a mixed acid of dilute nitric acid and dilute hydrofluoric acid, and measuring the titanium in the obtained constant volume liquid by ICP mass spectrometry using an ICP mass spectrometer (Agilent 8800, available from Agilent Technologies).

Furthermore, the content ratio in terms of metal (Ti/VAc) [μmol/mol] of the titanium compound (B) to a vinyl ester structural unit that, without being saponified, remains in the EVOH resin (A2) is usually from 0.1 to 300, preferably from 0.5 to 200, and more preferably from 1 to 150. When the content ratio in terms of metal of the titanium compound (B) to a vinyl ester structural unit that, without being saponified, remains in the EVOH resin (A2) is in the range described above, thermal stability tends to be excellent.

It is presumed that the thermal degradation is usually caused by, due to heat, elimination of the vinyl ester structural unit in the EVOH resin and formation of a double bond in a main chain in the molecule of the EVOH resin. In the present composition, it is presumed that, because of the interaction between the vinyl ester structural unit of the EVOH resin and titanium of the titanium compound, the elimination of the vinyl ester structural unit from the EVOH resin is suppressed, and thermal stability is improved.

## Additional Thermoplastic Resin

The present composition may contain a thermoplastic resin besides the EVOH resin in a range that does not impair the effects of the present disclosure (for example, usually 30 mass% or less, preferably 20 mass% or less, and particularly preferably 10 mass% or less, of the present composition).

As the additional thermoplastic resin, a known thermoplastic resin can be used, and examples thereof include a polyester-based resin, a polystyrene-based resin, a polyvinylchloride-based resin, a polycarbonate-based resin, an ionomer, polyvinylidene chloride, a polyester elastomer, a polyurethane elastomer, chlorinated polyethylene, and chlorinated polypropylene. These may be used alone or in combination of two or more types.

## Additional Compounding Agent

Furthermore, the present composition may contain a compounding agent that is typically blended in an EVOH resin in a range that does not impair the effects of the present disclosure (for example, 5 mass% or less). Examples of the aforementioned compounding agent that may be blended include an inorganic double salt (for example, hydrotalcite), a plasticizer (for example, an aliphatic polyalcohol such as ethylene glycol, glycerin, and hexanediol), an oxygen absorber [for example, an inorganic oxygen absorber such as aluminum powder and potassium sulfite; ascorbic acid and fatty acid esters and metal salts thereof, polyhydric phenols such as gallic acid and hydroxyl group-containing phenolic aldehyde resins, a terpene compound, a blended material of a tertiary hydrogen-containing resin and a transition metal (for example,

combination of polypropylene and cobalt), a blended material of a carbon-carbon unsaturated bond-containing resin and a transition metal (for example, combination of polybutadiene and cobalt), a photooxidation degradable resin (for example, polyketone), an anthraquinone polymer (for example, polyvinylanthraquinone), as well as a macromolecule-based oxygen absorber such as a material in which a photoinitiator (for example, benzophenone), an antioxidant other than those described above, and a deodorant (for example, active carbon) are added to these blended materials], a thermal stabilizer, a light stabilizer, a UV absorber, a colorant, an antistatic agent, a surfactant (however, excluding those used as a lubricant), an antimicrobial agent, an anti-blocking agent, and a filler (for example, an inorganic filler). One of these compounds may be used alone or two or more thereof may be used in combination.

Method for Producing Composition

The present composition can be produced by, for example, mixing the EVOH resin (A) and the titanium compound (B) using a known method, such as a dry blending method, a melt mixing method, a solution mixing method, or an impregnation method. Among these, production is preferably performed by including melt mixing a composition raw material containing the EVOH resin (A) and the titanium compound (B). Furthermore, these production methods can be optionally combined.

Examples of the dry blending method include (i) a method of dry-blending a pellet-shaped EVOH resin (A) and a titanium compound (B) using a tumbler or the like.

Examples of the melt mixing method include (ii) a method of melt-kneading a dry blend obtained by dry-blending a pellet-shaped EVOH resin (A) and a titanium compound (B), and (iii) a method of melt-kneading a titanium compound (B) added to a molten EVOH resin (A).

Examples of the solution mixing method include (iv) a method of preparing a solution using a commercially available EVOH resin (A), blending a titanium compound (B) therein, performing solidification molding, then performing solid-liquid separation with a known means, and drying the obtained product; and (v) a method of, in the process of producing an EVOH resin (A), incorporating a titanium compound (B) in an ethylene-vinyl ester copolymer solution before saponification or a homogeneous solution of an EVOH resin (A) (water/alcohol solution or the like), performing solidification molding, then performing solid-liquid separation with a known means, and drying the obtained product.

Examples of the impregnation method include (vi) a method of bringing a pellet-shaped EVOH resin (A) into contact with an aqueous solution containing a titanium compound (B) to incorporate the titanium compound (B) in the EVOH resin (A), and then drying the EVOH resin (A).

As the aqueous solution containing a titanium compound (B), an aqueous solution of a titanium compound (B) or an aqueous solution obtained by immersing a titanium compound (B) in water containing various chemicals to elute titanium ions can be used.

In the impregnation method, the content of the titanium compound (B) (in terms of metal) can be controlled by the concentration of the titanium compound (B) in the aqueous solution in which the EVOH resin (A) is immersed, the immersion temperature, the immersion time, and the like.

The immersion time is usually from 0.5 to 48 hours, preferably 1 to 36 hours, and the immersion temperature is usually from 10 to 40°C, preferably 20 to 35°C.

As the drying method in each of the above production methods, various drying methods can be employed, and either static drying or fluidized drying may be employed. These methods can be performed in combination.

As described above, in the present disclosure, the above different methods can be combined. Among those, a melt mixing method is preferable, and the method (ii) is particularly preferable, from the viewpoint of productivity and obtaining a composition that exhibits more significant effects of the present disclosure. In a case where the additional thermoplastic resin and the additional compounding agent are used, they are blended by a common process according to the aforementioned production method.

The present composition produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, and more preferably from 2.5 to 5.5 mm, and a major axis length is usually from 1.5 to 30 mm, preferably from 3 to 20 mm, and more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped EVOH resin used in each of the production methods are preferably the same.

The water content of the present composition is usually from 0.01 to 0.5 mass%, preferably from 0.05 to 0.35 mass%, and particularly preferably from 0.1 to 0.3 mass%.

The water content of the present composition is measured and calculated by the following method.

The mass ($W_1$) of the present composition before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following equation.

Equation

$$\text{Water content (mass\%)} = [(W_1 - W_2)/W_1] \times 100$$

When the present composition is in the form of pellets, preferably, a known lubricant is adhered to the surface of the pellets from the viewpoint of stabilizing the feed properties at the time of melt molding. Examples of the type of lubricant include higher fatty acids having 12 or more carbons (for example, lauric acid, myristic acid, palmitic acid, stearic acid, behenic acid, and oleic acid), higher fatty acid esters (for example, methyl esters, isopropyl esters, butyl esters, and octyl esters of higher fatty acids), higher fatty acid amides (for example, saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide), low-molecular-weight polyolefins (for example, low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more thereof may be used in combination. The content of the lubricant is usually 5 mass% or less, and preferably 1 mass% or less, of the present composition. The lower limit is usually 0 mass%.

The present composition obtained as described above has excellent thermal stability, and the temperature (°C) at the time when the mass of the present composition has decreased by 5% is usually 345.0°C or higher, preferably 346.0°C or higher, and more preferably 347.0°C or higher. A higher upper limit of the temperature (°C) at the time when the mass has decreased by 5% is preferred more; however, the upper limit is usually 400°C.

The present composition thus produced is prepared into various forms such as a pellet, a powder form, or a liquid form, and is provided as a molding material for various molded products. In particular, in the present disclosure, when the composition is provided as a material for melt molding, the effects of the present disclosure tend to be obtained more efficiently, which is preferable.

The present composition also includes a resin composition obtained by mixing resins other than the EVOH resin used in the present composition.

Examples of the molded product include a single-layered film molded from the present composition, and a multi-layered structure having a layer composed of the present composition.

## Multi-Layered Structure

A multi-layered structure according to an embodiment of the present disclosure (hereinafter, referred to as "present multi-layered structure") has a layer made of the present composition. When the layer composed of the present composition (hereinafter, simply referred to as "present composition layer") is laminated with an additional substrate containing a thermoplastic resin other than the present composition as a main component (hereinafter, the resin used for the substrate may be abbreviated as "substrate resin"), strength can be further imparted, the present composition layer can be protected from the influence of moisture or the like, and other functions can be imparted.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-α-olefin (α-olefin having from 4 to 20 carbons) copolymers; polypropylene-based resins, such as polypropylene and propylene-α-olefin (α-olefin having from 4 to 20 carbons) copolymers; polyolefin-based resins in a broad sense including (unmodified) polyolefin-based resins, such as polybutene, polypentene, polycyclic olefin-based resins (polymers having a cyclic olefin structure in at least one of a main chain or a side chain), and modified olefin-based resins, such as unsaturated carboxylic acid-modified polyolefin-based resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide-based resins (including copolymerized polyamides); poly(vinyl chloride); poly(vinylidene chloride); acrylic resins; polystyrene-based resins; vinyl ester-based resins; polyester elastomers; polyurethane elastomers; polystyrene elastomers; halogenated polyolefins, such as chlorinated polyethylene and chlorinated polypropylene; and aromatic or aliphatic polyketones. One of these may be used alone or two or more thereof may be used in combination.

Among these, polyamide-based resins, polyolefin-based resins, polyester-based resins, and polystyrene-based resins, which are hydrophobic resins, are preferable. Polyolefin-based resins such as polyethylene-based resins,

polypropylene-based resins, polycyclic olefin-based resins, and unsaturated carboxylic acid-modified polyolefin-based resins thereof are more preferable.

When the present composition layers are denoted by a (a1, a2, ...) and the substrate resin layers are denoted by b (b1, b2, ...), the layer configuration of the present multi-layered structure may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition and a thermoplastic resin other than the present composition, which is obtained by re-melt molding an end, a defective product, or the like generated in the process of producing the present multi-layered structure, is denoted by R, the layer configuration can also be b/R/a, b/R/a/b, b/R/a/R/b, b/a/R/a/b, b/R/a/R/a/R/b, or the like. The number of layers of the present multi-layered structure in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin-based polymers produced by chemically bonding an unsaturated carboxylic acid or anhydride thereof to a polyolefin-based resin by an addition reaction, a graft reaction, or the like. Examples of the carboxy group-containing modified polyolefin-based polymers described above include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone, or two or more of these may be used in combination.

In the present multi-layered structure, when an adhesive resin layer is used between the present composition layer and the substrate resin layer, the adhesive resin layer is located on both sides of the present composition layer, and therefore use of an adhesive resin having excellent hydrophobicity is preferable.

The aforementioned substrate resin or adhesive resin may contain a component known in the art, such as a plasticizer, a filler, clay (such as montmorillonite), a colorant, an antioxidant, an antistatic agent, a lubricant, a core material, an anti-blocking agent, or wax in a range such that the subject matter of the present disclosure is not impeded (for example, 30 mass% or less, and preferably 10 mass% or less, with respect to the entire resin). These may be used alone or in combination of two or more types.

The present composition layer and the substrate resin layer described above can be laminated (including the case of interposing an adhesive resin layer) by a known method. Examples thereof include a method of melt-extrusion laminating the substrate resin to a film, a sheet, or the like of the present composition, a method of melt-extrusion laminating the present composition to the substrate resin layer, a method of co-extruding the present composition and the substrate resin, a method of dry laminating the present composition (layer) and the substrate resin (layer) using a known adhesive such as an organic titanium compound, an isocyanate compound, a polyester-based compound, or a polyurethane compound, and a method of applying a solution of the present composition onto the substrate resin and then removing the solvent. Among these, production is preferably performed by melt molding the present composition layer, and specifically by a coextrusion method, from the viewpoints of cost and the environment.

The present multi-layered structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multi-layered structure and is selected from a range of usually from 40 to 170°C and preferably about from 60 to 160°C. When the stretching temperature is too low, stretchability deteriorates, whereas when the stretching temperature is too high, a stable stretched state is difficult to maintain.

The present multi-layered structure after the stretching treatment may be subjected to heat setting for the purpose of imparting dimensional stability. The heat setting can be carried out by a well-known means; for example, the present multi-layered structure that is stretched is heat-treated usually at a temperature of 80 to 180°C and preferably at a temperature of 100 to 165°C usually for about 2 to 600 seconds while the present multi-layered structure is kept in a state of tension.

In the case of using the present multi-layered structure that is stretched as a shrink film, in order to impart heat shrinkability, the present multi-layered structure that is stretched is not subjected to the heat setting described above, but subjected to a treatment such as application of cool air to the present multi-layered structure after the stretching treatment to cool-set the structure.

The thickness of the present multi-layered structure (including a stretched multi-layered structure), and the thicknesses of the present composition layer, the substrate resin layer, and the adhesive resin layer constituting the multi-layered structure cannot be generally defined due to the layer configuration, the type of the substrate resin, the type of the

adhesive resin, the application, the packaging form, the required physical properties, and the like, but the thickness of the present multi-layered structure (including a stretched multi-layered structure) is usually from 10 to 5000 μm, preferably from 30 to 3000 μm, and particularly preferably from 50 to 2000 μm. The thickness of the present composition layer is usually from 1 to 500 μm, preferably from 3 to 300 μm, and particularly preferably from 5 to 200 μm. The thickness of the substrate resin layer is usually from 5 to 3000 μm, preferably from 10 to 2000 μm, and particularly preferably from 20 to 1000 μm. The thickness of the adhesive resin layer is usually from 0.5 to 250 μm, preferably from 1 to 150 μm, and particularly preferably from 3 to 100 μm.

Furthermore, the thickness ratio of the present composition layer to the substrate resin layer (present composition layer/substrate resin layer) in the present multi-layered structure is usually from 1/99 to 50/50, preferably from 5/95 to 45/55, and particularly preferably from 10/90 to 40/60, in terms of the ratio of the thickest layers to each other when a plurality of layers are present for each type of layer. The thickness ratio of the present composition layer to the adhesive resin layer (the present composition layer/the adhesive resin layer) in the present multi-layered structure is usually from 10/90 to 99/1, preferably from 20/80 to 95/5, and particularly preferably from 50/50 to 90/10, in terms of the ratio of the thickest layers to each other when a plurality of layers are present for each type of layer.

A multi-layered container in a shape of a cup or a tray can also be produced using the present multi-layered structure. In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-shaped multi-layered container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

A single-layered film molded by using the present composition or a container or lid material composed of the present multi-layered structure, such as a bag, a cup, a tray, a tube, or a bottle, is useful for various packaging materials and containers for general food products, seasonings such as mayonnaise and dressing, fermented food products such as miso, oil and/or fat food products such as salad oil, beverages, cosmetics, pharmaceuticals, and the like.

Examples

Hereinafter, the present disclosure will be more specifically described with reference to examples, but the present disclosure is not limited to the examples below as long as it does not deviate from the gist of the present disclosure. In the examples, "parts" and "%" are based on mass.

Example 1

As the EVOH resin (A1), pellets of an EVOH resin having an ethylene structural unit content of 29 mol%, a degree of saponification of 99.8 mol%, an MFR of 3.9 g/10 min (210°C; load: 2160 g) were used. As the EVOH resin (A2), pellets of an EVOH resin having an ethylene structural unit content of 38 mol%, a degree of saponification of 98.5 mol%, an MFR of 3.5 g/10 min (210°C; load: 2160 g) were used. Furthermore, as the titanium compound (B), a rutile-type titanium(IV) oxide having an average particle size of 5 μm or less (available from FUJIFILM Wako Pure Chemical Corporation) was used.

In pellets of the EVOH resins blended in a manner that the mass content ratio A1/A2 of the EVOH resin (A1) to the EVOH resin (A2) was 80/20, the titanium oxide was dry-blended in a manner that the content of the titanium oxide in terms of metal was $0.5 \times 10^{-6}$ parts with respect to 1 part of the EVOH resin (A2) and the content ratio in terms of metal of the titanium oxide with respect to a vinyl ester structural unit that, without being saponified, remained in the EVOH resin (A2) was 43.0 μmol/mol, and thus a mixture was obtained.

The mixture was supplied to a twin-screw extruder (20 mmφ) equipped with a two-hole die, extruded under the following extrusion conditions, and the discharged strand was cooled and solidified in a water tank. Subsequently, air was blown to the solidified strand to remove water droplets on the surface of the strand, and then the strand was cut to produce pellets of a composition.

Extrusion Condition

Extruder set temperature (°C): C1/C2/C3/C4

= 160/220/220/220

Example 2

Pellets of a composition were obtained in the same manner as in Example 1 except that pellets of an EVOH resin having an ethylene structural unit content of 38 mol%, a degree of saponification of 95.2 mol%, an MFR of 3.2 g/10 min (210°C; load: 2160 g) were used as the EVOH resin (A2) and that the content ratio in terms of metal of the titanium oxide with respect to a vinyl ester structural unit that, without being saponified, remained in the EVOH resin (A2) was 13.7 μmol/mol.

Example 3

Pellets of a composition were obtained in the same manner as in Example 1 except that pellets of an EVOH resin having an ethylene structural unit content of 44 mol%, a degree of saponification of 97.6 mol%, an MFR of 3.6 g/10 min (210°C; load: 2160 g) were used as the EVOH resin (A2) of Example 1 and that the content ratio in terms of metal of the titanium oxide with respect to a vinyl ester structural unit that, without being saponified, remained in the EVOH resin (A2) was 29.2 μmol/mol.

Example 4

Pellets of a composition were obtained in the same manner as in Example 1 except that the mass content ratio A1/A2 of the EVOH resin (A1) to the EVOH resin (A2) of Example 1 was changed to 90/10, that the content of the titanium oxide in terms of metal was changed to $1 \times 10^{-6}$ parts with respect to 1 part of the EVOH resin (A2), and that the content ratio in terms of metal of the titanium oxide with respect to a vinyl ester structural unit that, without being saponified, remained in the EVOH resin (A2) was 86.1 μmol/mol.

Example 5

Pellets of a composition were obtained in the same manner as in Example 1 except that the mass content ratio A1/A2 of the EVOH resin (A1) to the EVOH resin (A2) of Example 1 was changed to 70/30, that the content of the titanium oxide in terms of metal was changed to $0.33 \times 10^{-6}$ parts with respect to 1 part of the EVOH resin (A2), and that the content ratio in terms of metal of the titanium oxide with respect to a vinyl ester structural unit that, without being saponified, remained in the EVOH resin (A2) was 28.4 μmol/mol.

Comparative Example 1

Pellets of a composition were obtained in the same manner as in Example 1, except that no titanium oxide of Example 1 was used.

Comparative Example 2

Pellets of a composition were obtained in the same manner as in Example 1 except that the content of the titanium oxide in terms of metal of Example 1 was changed to $5 \times 10^{-6}$ parts with respect to 1 part of the EVOH resin (A2), and that the content ratio in terms of metal of the titanium oxide with respect to a vinyl ester structural unit that, without being saponified, remained in the EVOH resin (A2) was 430.3 μmol/mol.

Comparative Example 3

Pellets of a composition were obtained in the same manner as in Example 1 except that pellets of an EVOH resin having an ethylene structural unit content of 38 mol%, a degree of saponification of 99.8 mol%, an MFR of 4.0 g/10 min (210°C; load: 2160 g) were used as the EVOH resin (A2) of Example 1 and that the content ratio in terms of metal of the titanium oxide with respect to a vinyl ester structural unit that, without being saponified, remained in the EVOH resin (A2) was 319.9 μmol/mol.

Comparative Example 4

Pellets of a composition were obtained in the same manner as in Example 4 except that the content of the titanium oxide in terms of metal of Example 4 was changed to $10 \times 10^{-6}$ parts with respect to 1 part of the EVOH resin (A2), and that the content ratio in terms of metal of the titanium oxide with respect to a vinyl ester structural unit that, without being saponified, remained in the EVOH resin (A2) was 860.6 μmol/mol.

Comparative Example 5

Pellets of a composition were obtained in the same manner as in Comparative Example 3 except that the content of the titanium oxide in terms of metal of Comparative Example 3 was changed to $5 \times 10^{-6}$ parts with respect to 1 part of the EVOH resin (A2), and that the content ratio in terms of metal of the titanium oxide with respect to a vinyl ester structural unit that, without being saponified, remained in the EVOH resin (A2) was 3198.7 μmol/mol.

The produced pellets of the compositions of Examples 1 to 5 and Comparative Examples 1 to 5 were subjected to the following thermal stability evaluation. The results are listed in Table 1 below.

Thermal Stability Evaluation

Using 10 mg of the obtained pellets of each of the compositions, the temperature at the time when the mass decreased to 95% of the mass before measurement (5% loss temperature) was measured under the conditions of an airflow rate of 20 mL/min, a temperature increase rate of 10°C/min, and a temperature range from 50 to 550°C in a nitriding atmosphere with a thermogravimetric apparatus (TGA-8000, available from Shimadzu Corporation). A higher temperature indicates superior thermal stability.

[Table 1]

| | EVOH resin (A) | | | | Mass content ratio (A1/A2) | Content of titanium compound (B) in terms of metal (part) *1 | Content of titanium compound (B) in terms of metal/vinyl ester structural unit (μmol/mol) *2 | Thermal Stability Evaluation |
|---|---|---|---|---|---|---|---|---|
| | EVOH resin (A1) | | EVOH resin (A2) | | | | | |
| | Ethylene structural unit content (mol%) | Degree of saponification (mol%) | Ethylene structural unit content (mol%) | Degree of saponification (mol%) | | | | 5% Loss temperature (°C) |
| Example 1 | 29 | 99.8 | 38 | 98.5 | 80/20 | $0.5 \times 10^{-6}$ | 43.0 | 348.2 |
| Example 2 | 29 | 99.8 | 38 | 95.2 | 80/20 | $0.5 \times 10^{-6}$ | 13.7 | 350.0 |
| Example 3 | 29 | 99.8 | 44 | 97.6 | 80/20 | $0.5 \times 10^{-6}$ | 29.2 | 350.2 |
| Example 4 | 29 | 99.8 | 38 | 98.5 | 90/10 | $1 \times 10^{-6}$ | 86.1 | 347.0 |
| Example 5 | 29 | 99.8 | 38 | 98.5 | 70/30 | $0.33 \times 10^{-6}$ | 28.4 | 348.8 |
| Comparative Example 1 | 29 | 99.8 | 38 | 98.5 | 80/20 | 0 | 0 | 344.5 |
| Comparative Example 2 | 29 | 99.8 | 38 | 98.5 | 80/20 | $5 \times 10^{-6}$ | 430.3 | 340.8 |
| Comparative Example 3 | 29 | 99.8 | 38 | 99.8 | 80/20 | $0.5 \times 10^{-6}$ | 319.9 | 341.0 |
| Comparative Example 4 | 29 | 99.8 | 38 | 98.5 | 90/10 | $10 \times 10^{-6}$ | 860.6 | 336.6 |
| Comparative Example 5 | 29 | 99.8 | 38 | 99.8 | 80/20 | $5 \times 10^{-6}$ | 3198.7 | 342.4 |

*1 Per 1 part of EVOH resin (A2)
*2 Content ratio in terms of metal of titanium compound (B) to vinyl ester structural unit that, without being saponified, remained in EVOH resin (A2)

As is clear from the results in Table 1 above, the compositions of Examples 1 to 5 each containing the specific trace amount of the titanium compound (B) with respect to the EVOH resin (A2) had higher 5% loss temperatures, and thus had superior thermal stability, as compared to the composition of Comparative Example 1 that did not contain the titanium compound (B) and the compositions of Comparative Examples 2, 4, and 5 containing the titanium compound (B) in an amount out of the specific range with respect to the EVOH resin (A2).

Furthermore, the compositions of Examples 1 to 5 each having the degree of saponification of the EVOH resin (A2) within the specific range had a higher 5% loss temperature, and thus had superior thermal stability, as compared to the composition of Comparative Example 3 having a degree of saponification of the EVOH resin (A2) out of the range.

A multi-layered structure and a multi-layered container having a layer made of each of the compositions of Examples 1 to 5 also have excellent thermal stability.

Specific embodiments of the present disclosure were described in the above examples, but the above examples are merely illustrative and are not to be construed as limiting. Various modifications apparent to those skilled in the art are intended to be within the scope of the present disclosure.

Industrial Applicability

The present composition has an increased thermal decomposition temperature of the composition at the time of melt molding and is excellent in thermal stability. Thus, the present composition is useful as various packaging materials for various food products, seasonings such as mayonnaise and dressing, fermented food products such as miso, oil and/or fat food products such as salad oil, beverages, cosmetics, and medical supplies.

## Claims

**1.** A composition comprising an ethylene-vinyl alcohol copolymer (A) and a titanium compound (B),

the ethylene-vinyl alcohol copolymer (A) containing at least two types of ethylene-vinyl alcohol copolymers, which are an ethylene-vinyl alcohol copolymer (A1) and an ethylene-vinyl alcohol copolymer (A2), having different ethylene structural unit contents,
a difference between the ethylene structural unit contents of the ethylene-vinyl alcohol copolymer (A1) and the ethylene-vinyl alcohol copolymer (A2) in the ethylene-vinyl alcohol copolymer (A) being 4 mol% or greater,
the ethylene-vinyl alcohol copolymer (A2) having a degree of saponification of from 90 to 99.7 mol%, and
a content of the titanium compound (B) in terms of metal being $0.001 \times 10^{-6}$ parts by mass or greater and less than $5 \times 10^{-6}$ parts by mass with respect to 1 part by mass of the ethylene-vinyl alcohol copolymer (A2).

**2.** The composition according to claim 1, wherein an ethylene structural unit content of the ethylene-vinyl alcohol copolymer (A2) is greater than an ethylene structural unit content of the ethylene-vinyl alcohol copolymer (A1).

**3.** The composition according to claim 1 or 2, wherein the degree of saponification of the ethylene-vinyl alcohol copolymer (A2) is lower than a degree of saponification of the ethylene-vinyl alcohol copolymer (A1).

**4.** The composition according to claim 1 or 2, wherein a difference between a degree of saponification of the ethylene-vinyl alcohol copolymer (A1) and the degree of saponification of the ethylene-vinyl alcohol copolymer (A2) is 0.2 mol% or greater.

**5.** The composition according to claim 1 or 2, wherein a mass content ratio (A1/A2) of the ethylene-vinyl alcohol copolymer (A1) to the ethylene-vinyl alcohol copolymer (A2) is from 95/5 to 50/50.

**6.** The composition according to claim 1 or 2, wherein a content ratio in terms of metal (Ti/VAc) [$\mu$mol/mol] of the titanium compound (B) to a vinyl ester structural unit that, without being saponified, remains in the ethylene-vinyl alcohol copolymer (A2) is from 0.1 to 300.

**7.** A material for melt molding, the material comprising the composition according to claim 1 or 2.

**8.** A multi-layered structure comprising a layer containing the composition according to claim 1 or 2.

**9.** A multi-layered container comprising the multi-layered structure according to claim 8.

**10.** The multi-layered container according to claim 9, wherein the multi-layered container has a shape of a cup or a tray.

**11.** A method for producing the composition according to claim 1 or 2,

the method comprising
mixing the two or more types of ethylene-vinyl alcohol copolymers (A) having different ethylene structural unit contents and a titanium compound.

**12.** A method for producing the multi-layered structure according to claim 8,

the method comprising
melt molding a layer containing the composition.

## INTERNATIONAL SEARCH REPORT

International application No.
**PCT/JP2024/033596**

**A. CLASSIFICATION OF SUBJECT MATTER**

***C08L 29/04***(2006.01)i; ***B65D 65/40***(2006.01)i
FI: C08L29/04 A; B65D65/40 D

According to International Patent Classification (IPC) or to both national classification and IPC

**B. FIELDS SEARCHED**

Minimum documentation searched (classification system followed by classification symbols)

C08L29/04; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/004255 A1 (THE NIPPON SYNTHETIC CHEMICAL INDUSTRY CO., LTD.) 03 January 2019 (2019-01-03)<br>claim 1 | 1-12 |
| A | JP 2019-163378 A (MITSUBISHI CHEMICAL CORPORATION) 26 September 2019 (2019-09-26)<br>claim 1, paragraphs [0069]-[0070], [0083], [0093]-[0094], [0097], [0104], [0107]-[0129], examples 1-3 | 1-12 |
| A | WO 2013/168714 A1 (KONICA MINOLTA, INC.) 14 November 2013 (2013-11-14)<br>claims 1-5 | 1-12 |
| A | JP 2011-140616 A (KURARAY CO., LTD.) 21 July 2011 (2011-07-21)<br>claims 1, 4 | 1-12 |
| A | JP 2016-148056 A (KURARAY CO., LTD.) 18 August 2016 (2016-08-18)<br>claims 1, 7, paragraph [0060] | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/033596**

**C. DOCUMENTS CONSIDERED TO BE RELEVANT**

| Category* | Citation of document, with indication, where appropriate, of the relevant passages | Relevant to claim No. |
|---|---|---|
| A | WO 2014/171494 A1 (KONICA MINOLTA, INC.) 23 October 2014 (2014-10-23) claims 1, 3 | 1-12 |
| A | JP 03-175033 A (KURARAY CO., LTD.) 30 July 1991 (1991-07-30) claim 1, page 5, upper right column, line 2 to page 6, table 1, example 7 | 1-12 |
| A | JP 11-323189 A (MITSUBISHI MATERIALS CORPORATION) 26 November 1999 (1999-11-26) paragraph [0017] | 1-12 |

Form PCT/ISA/210 (second sheet) (July 2022)

**INTERNATIONAL SEARCH REPORT**
**Information on patent family members**

International application No.
**PCT/JP2024/033596**

| Patent document cited in search report | Publication date (day/month/year) | Patent family member(s) | Publication date (day/month/year) |
|---|---|---|---|
| WO 2019/004255 A1 | 03 January 2019 | US 2020/0087504 A1<br>claim 1<br>EP 3647362 A1<br>CN 110603291 A | |
| JP 2019-163378 A | 26 September 2019 | (Family: none) | |
| WO 2013/168714 A1 | 14 November 2013 | EP 2848595 A1<br>claims 1-5 | |
| JP 2011-140616 A | 21 July 2011 | US 2013/0040157 A1<br>claims 1, 7<br>EP 2554590 A1 | |
| JP 2016-148056 A | 18 August 2016 | US 2013/0040157 A1<br>claims 1, 7, paragraph [0063]<br>EP 2554590 A1 | |
| WO 2014/171494 A1 | 23 October 2014 | US 2016/0062000 A1<br>claims 1, 3<br>CN 105122096 A | |
| JP 03-175033 A | 30 July 1991 | (Family: none) | |
| JP 11-323189 A | 26 November 1999 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63230757 A
- JP 2004244451 A
- WO 2013146961 A